# EUROPÄISCHE PATENTANMELDUNG

(11) **EP 1 145 649 A1**
(43) Veröffentlichungstag der Anmeldung: **17.10.2001**
(21) Anmeldenummer: 00108154.6
(22) Anmeldetag: 13.04.2000
(51) Int. Cl.: A23L 1/32

(54) **Verfahren zum Herstellen eines Eiprodukts**

(71) Anmelder: Oldenburger Fleischwaren GmbH, 26135 Oldenburg (DE)
(72) Erfinder: Oltmer, Jürgen, 26135 Oldenburg (DE)
(74) Vertreter: Winkler, Andreas, Dr.

(57) **Zusammenfassung**

Verfahren zum Herstellen eines Eiprodukts, mit den Schritten
a) Erzeugen einer Emulsion aus Vollei, Pflanzenfett und Wasser,
b) Vermischen der Emulsion mit Gelatine, Hydrokolloiden und Gewürzen zu einer Brätmasse,
c) Füllen der Brätmasse in Därme oder Formen,
d) Brühen der Brätmasse bei einer Brühtemperatur, so daß eine Kerntemperatur von mindestens 72°C mindestens eine Minute lang aufrechterhalten wird.

## Beschreibung

Die Erfindung betrifft ein Verfahren zum Herstellen eines Eiprodukts sowie ein nach dem Verfahren hergestelltes Eiprodukt.

Es ist bekannt, aus emulgierten eihaltigen Mischungen Eiprodukte wie bspw. Eierstich herzustellen. Die Erfindung hat sich zur Aufgabe gestellt, ein Verfahren zum Herstellen eines Eiprodukts bereitzustellen, mit dem ein andersartiges, in vielfacher Weise zu verwendendes oder weiterzuverarbeitendes Eiprodukt hergestellt werden kann.

Diese Aufgabe wird erfindungsgemäß durch ein Verfahren zum Herstellen eines Eiprodukts gelöst, welches die Schritte aufweist: a) Erzeugen einer Emulsion aus Vollei, Wasser und Pflanzenfett und Wasser, b) Vermischen der Emulsion mit Gelatinemasse, Hydrokolloiden und Gewürzen zu einer Brätmasse, c) Füllen der Brätmasse in Därme oder Formen, und d) Brühen der Brätmasse bei einer Brühtemperatur, so daß eine Kerntemperatur von mindestens 72°C mindestens eine Minute lang aufrechterhalten wird.

Vorzugsweise ist der Gewichtsanteil von Vollei in der Brätmasse größer als der Gewichtsanteil des Pflanzenfetts, der Gewichtsanteil des Pflanzentfetts größer als der Gewichtsanteil des Wassers, der Gewichtsanteil des Wassers größer als der Gewichtsanteil der Gelatinemasse und der Gewichtsanteil der Gelatinemasse größer als der Gewichtsanteil von Hydrokolloiden und Gewürzen.

Vorzugsweise enthält die Brätmasse etwa 50 bis 70 Gew.-%, weiter bevorzugt etwa 60 Gew.-% Vollei, etwa 20 bis 30 Gew.-%, weiter bevorzugt etwa 25 Gew.-% Pflanzenfett, etwa 5 bis 15 Gew.-%, weiter bevorzugt etwa 10 Gew.-% Wasser, etwa 3 bis 7 Gew.-%, weiter bevorzugt etwa 5 Gew.-% Gelatinemasse und etwa 1 bis 1, 5 Gew.-%, weiter bevorzugt etwa 1,25 Gew.-% Hydrokolloide. Die Gelatinemasse bestehend bzw. wird hergestellt aus 50 % Gelatinepulver und 50 % Wasser.

Bevorzugt wird das Vollei aus Volleipulver und Wasser hergestellt.

Es kann vorgesehen sein, daß anstelle des Wasseranteils ganz oder teilweise Milch verwendet wird.

Bevorzugt wird halbgehärtetes Pflanzenfett verwendet.

Es kann vorgesehen sein, daß als Hydrokolloide Tarakernmehl, Xanthan, Carrageen, Guarkernmehl oder eine Mischung daraus verwendet wird.

Vorzugsweise enthält die Brätmasse 0,5 bis 1,5 Gew.-% Gewürze und/oder 1 bis 2 Gew.-% Kochsalz und/oder 2 bis 3 Gew.-% Stärke, insbesondere Kartoffelstärke, und/oder 0,25 Gew.-% Speisewürze.

Die Brätmasse kann mit Einlagematerial versehen sein, insbesondere Kochschinken, Käse, Sichtgewürze, Gemüse, insbesondere Pilze oder Kartoffeln.

Beim Erzeugen der Emulsion kann zerkleinertes Eis bzw. Eisschnee anstelle von Wasser verwendet werden.

Es kann vorgesehen sein, daß zum Erzeugen der Emulsion in einem ersten Arbeitsgang aus Vollei und etwa 1/3 der Wassermenge eine homogene Masse hergestellt wird und in einem zweiten Arbeitsgang nach Zugabe des Pflanzenfetts und 2/3 der Wassermenge die Emulsion hergestellt wird.

In Ausgestaltung der Erfindung kann vorgesehen sein, daß das Eiprodukt nach dem Brühen geräuchert wird.

Die Erfindung betrifft ferner ein Eiprodukt, das nach dem erfindungsgemäßen Verfahren hergestellt ist.

Die Erfindung wird nachfolgend anhand eines Ausführungsbeispiels im einzelnen beschrieben.

In Vorbereitung des Herstellungsverfahrens werden zunächst Gelatinemasse und Vollei bereitgestellt. Für die Gelatinemasse werden 50% des hierfür benötigten Wassers mit dem Gelatinepulver (Aspikpulver) in einem Mischer bzw. Kutter, wie er bei der Wurst- bzw. Brühwurstherstellung üblicherweise verwendet wird, vermischt und 10 Minuten zum Quellen stehengelassen. Die übrigen 50% des für die Gelatineherstellung benötigten Wassers werden zum Kochen gebracht und nach der Quellzeit dem Kutter zugeführt. Alles wird vermischt, bis eine homogene Gelatinemasse entstanden ist. Diese Masse wird anschließend bis auf 35°C abgekühlt und zur weiteren Verwendung bereitgestellt.

Vollei in Pulverform wird mit der benötigten Menge kalten Wassers im Kutter vermischt. Je nach Spezifikation wird insbesondere 20 Gew.-% Volleipulver mit 80 Gew.-% Wasser vermischt. Es sollte klumpenfreies Vollei in flüssiger Form vorliegen.

Die Emulgierung des Ei- und Pflanzenfettmaterials im Kutter ist ein wesentlicher Abschnitt des Verfahrens. Das Vollei wird in den in einem langsamen Gang arbeitenden Kutter gegeben und mit einem Drittel der vorgesehenen Wassermenge in Form von zerkleinertem Eis (Eisschnee) und Salz zu einer homogenen Masse gekuttert. Anschließend wird das Pflanzenfett und die übrigen zwei Drittel des Wassers bzw. Eises, wiederum im langsamen Gang, dem Kutter zugeführt und dann im Schnellgang zu einer emulgierten Masse gekuttert. Am Ende dieses Arbeitsvorganges sollten Hilfs- und Zusatzstoffe sowie Gelatine so rechtzeitig zugesetzt werden, daß sie sich noch gut mit dem Eimaterial vermengen können.

Wichtig bei diesem Misch- bzw. Emulgiervorgang ist die Geschwindigkeit der Wasser- bzw. Eiszugabe. Wird das Wasser zu schnell zugeführt, kann es nicht vollständig emulgiert werden, so daß später eine Trennung von Wasser und Fett auftreten kann. Um dies zu vermeiden, wird das Wasser sehr kalt bzw. in Form von zerkleinertem Eis zugeführt, weil dadurch einerseits die Temperatur der Masse absinkt und andererseits nur langsam Wasser in flüssiger Form freigesetzt wird und einzubinden ist. Anstelle von Eis könnte selbstverständlich auch zerkleinerte, gefrorene Milch verwendet werden.

Das Eis kann mit einer Temperatur von z.B. zwischen -5°C und -2°C zugeführt werden, so daß sich eine Endtemperatur der fertigen Mischung bzw. der Brätmasse zwischen 12 und 14°C ergibt.

Das verwendete Pflanzenfett ist vorzugsweise halb gehärtet, weil es einerseits nicht zu flüssig sein darf, damit das spätere Produkt eine feste Kontur besitzt, und andererseits nicht zu fest, damit eine Emulsion gebildet werden kann.

Einlagematerial wie Kochschinken, Sichtgewürze, Käse oder Gemüse wie z.B. Kartoffeln oder Pilze können je nach gewünschter Größe bzw. Körnung entweder vor dem Kuttern zugeführt werden, wobei der Kutter zur Erzielung der gewünschten Körnung eine bestimmte Zeit im Schneidgang betrieben wird, oder nach dem Kuttern, wenn lediglich eine Vermischung mit der Brätmasse gewünscht ist.

Nach Fertigstellung der Brätmasse wird diese in Därme oder Formen gefüllt, um im Endprodukt eine gute Konsistenz zu erhalten. Hier werden in erster Linie Vakuumfüller verwendet.

Beim anschließenden Brühvorgang liegt die Temperatur im Innenraum der Brühkammer im allgemeinen zwischen 75 und 80°C. Um eine ausreichende Haltbarkeit und eine bestimmte Produktsicherheit zu erreichen, sollte eine Kerntemperatur von 72°C überschritten bzw. mindestens eine Minute gehalten werden.

Wenn eine abschließende Räucherung vorgesehen ist, muß die Brätmasse in einen Faserdarm gefüllt werden. Ansonsten kann in Cellulose- oder Sterildärme gefüllt werden.

Das fertige, schnittfeste Produkt kann als Aufschnittware, Pizzatopping, Bratenfüllung oder Baguetteauflage verwendet werden. Aufgrund der besonderen Konsistenz kann das Erzeugnis auch angebraten werden, ohne seine vorgebene Form zu verlieren. Insgesamt weist das erfindungsgemäß nach Art der Brühwursttechnologie hergestellt Eiprodukt wesentliche vorteilhafte Unterschiede hinsichtlich Konsistenz und Geschmack im Vergleich zu bekannten Eiprodukten wie bspw. Eierstich auf.

## Patentansprüche

1. Verfahren zum Herstellen eines Eiprodukts, mit den Schritten
a) Erzeugen einer Emulsion aus Vollei, Pflanzenfett und Wasser,
b) Vermischen der Emulsion mit Gelatinemasse, Hydrokolloiden und Gewürzen zu einer Brätmasse,
c) Füllen der Brätmasse in Därme oder Formen,
d) Brühen der Brätmasse bei einer Brühtemperatur, so daß eine Kerntemperatur von mindestens 72°C mindestens eine Minute lang aufrechterhalten wird.

2. Verfahren nach Anspruch 1, **dadurch gekennzeichnet, daß** in der Brätmasse der Gewichtsanteil von Vollei größer ist als der Gewichtsanteil von Pflanzenfett, der Gewichtsanteil von Pflanzenfett größer ist als der Gewichtsanteil von Wasser, der Gewichtsanteil von Wasser größer ist als der Gewichtsanteil von Gelatinemasse und der Gewichtsanteil von Gelatinemasse größer ist als der von Hydrokolloiden und Gewürzen.

3. Verfahren nach Anspruch 1 oder 2, **dadurch gekennzeichnet, daß** die Brätmasse etwa 50 bis 70 % Vollei, etwa 20 bis 30 % Pflanzenfett, etwa 5 bis 15 % Wasser, etwa 3 bis 7 % Gelatinemasse und etwa 1 bis 1,5 % Hydrokolloide enthält.

4. Verfahren nach Anspruch 3, **dadurch gekennzeichnet, daß** die Brätmasse etwa 60 Gew.-% Vollei, etwa 25 Gew.-% Wasser, etwa 10 Gew.-% Pflanzenfett, etwa 5 Gew.-% Gelatinemasse und etwa 1,25 Gew.-% Hydrokolloide enthält.

5. Verfahren nach einem der vorangehenden Ansprüche, **dadurch gekennzeichnet, daß** das Vollei aus Volleipulver und Wasser hergestellt wird.

6. Verfahren nach einem der vorangehenden Ansprüche, **dadurch gekennzeichnet, daß** anstelle des Wasseranteils ganz oder teilweise Milch verwendet wird.

7. Verfahren nach einem der vorangehenden Ansprüche, **dadurch gekennzeichnet, daß** halbgehärtetes Pflanzenfett, insbesondere halbflüssiges, selektiv gehärtetes Sojaöl, verwendet wird.

8. Verfahren nach einem der vorangehenden Ansprüche, **dadurch gekennzeichnet, daß** als Hydrokolloide Tarakernmehl, Xanthan, Carrageen, Guarkernmehl oder eine Mischung daraus verwendet wird.

9. Verfahren nach einem der vorangehenden Ansprüche, **dadurch gekennzeichnet, daß** die Brätmasse 0,5 bis 1,5 Gew.-% Gewürze und/oder 1 bis 2 Gew.-% Kochsalz und/oder 2 bis 3 Gew.-% Stärke, insbesondere Kartoffelstärke, und/oder 0,25 Gew.-% Speisewürze enthält.

10. Verfahren nach einem der vorangehenden Ansprüche, **dadurch gekennzeichnet, daß** die Brätmasse mit Einlagematerial versehen wird, insbesondere Kochschinken, Käse, Sichtgewürze und/oder Gemüse, insbesondere Pilze oder Kartoffeln.

11. Verfahren nach einem der vorangehenden Ansprüche, **dadurch gekennzeichnet, daß** beim Erzeugen der Emulsion zerkleinertes Eis anstelle von Wasser verwendet wird.

12. Verfahren nach einem der vorangehenden Ansprüche, **dadurch gekennzeichnet, daß** zum Erzeugen der Emulsion in einem ersten Arbeitsgang aus Vollei und etwa 1/3 der Wassermenge eine homogene Masse hergestellt wird und in einem zweiten Arbeitsgang nach Zugabe des Pflanzenfetts und 2/3 der Wassermenge die Emulsion hergestellt wird.

13. Verfahren nach einem der vorangehenden Ansprüche, **dadurch gekennzeichnet, daß** das Eiprodukt nach dem Brühen geräuchert wird.

14. Eiprodukt, hergestellt nach einem der vorangehenden Ansprüche.
